# EUROPEAN PATENT SPECIFICATION

(11) **EP 1 314 901 B1**
(45) Date of publication and mention of the grant of the patent: **08.03.2006**
(21) Application number: 02257955.1
(22) Date of filing: 19.11.2002
(51) Int. Cl.: F16C 33/64

(54) **Method for manufacturing outer ring and inner ring of bearing**
Herstellungsverfahren eines Innen- und Aussenlagerringes
Procédé de fabrication d'une bague de palier intérieure et extérieure

(30) Priority: 20.11.2001 JP 2001355086
(43) Date of publication of application: 28.05.2003
(73) Proprietor: Minebea Kabushiki Kaisha, Kitasaku-gun, Nagano-ken (JP)
(72) Inventor: Obara, Rikuro c/o Minebea Kabushiki-Kaisha, Nagano-ken (JP)
(74) Representative: Johnstone, Douglas Ian

(56) References cited:
- DE-C- 550 383
- US-A- 3 557 587
- US-A- 6 065 322
- US-B1- 6 196 946
- PATENT ABSTRACTS OF JAPAN vol. 2000, no. 09, 13 October 2000 (2000-10-13) & JP 2000 167641 A (NTN CORP), 20 June 2000 (2000-06-20)

## Description

### Background of the invention

### Technical Field

The present invention relates to a method for manufacturing outer and inner rings of a bearing.

### Description of the prior art

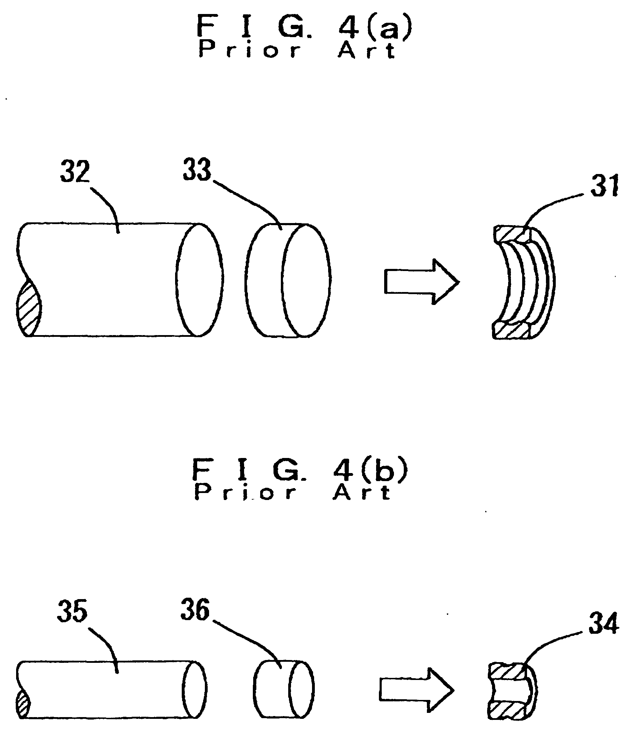

In the case of the prior art, the outer and inner rings for the bearing are formed from individual cylindrical bar materials of different diameter respectively. An example of method is illustrated in Figs. 4(a), 4(b).

In the manufacture of an outer ring 31 as shown in Fig. 4(a), a cylindrical bar material 32 having an outer diameter substantially equal to or slightly larger than that of the outer ring to be formed is cut to form a circular plate work 33 having a predetermined width (thickness, hereunder width) for the outer ring. The work will then be machined to have a ring shape. Finally an outer ring raceway is formed and the surface of the work is finished by cutting, grinding and / or polishing operations to provide the outer ring 31.

In the case of manufacturing an inner ring 34 as shown in Fig. 4(b), a cylindrical bar material 35 having an outer diameter substantially equal to or slightly larger than that of the inner ring to be formed is cut to form a circular plate work 36 having a predetermined width for the inner ring in the substantially same method as described in the case of manufacturing the outer ring. The work will then be machined to have a ring shape. Finally an inner ring raceway is formed and the surface of the work is finished by cutting, grinding and / or polishing operations to provide the inner ring 34.

In the above mentioned method for forming the outer and inner rings, each ring is formed by removing central portion thereof by machining so that large amount of chips are generated as a waste. The amount of the material to be wasted reaches approximately 70 % of the work, in order to have rings. Hence material cost must be paid for the waste also.

The tact time period required for manufacturing a pair of outer and inner rings separately is a sum of the times for processing each works.

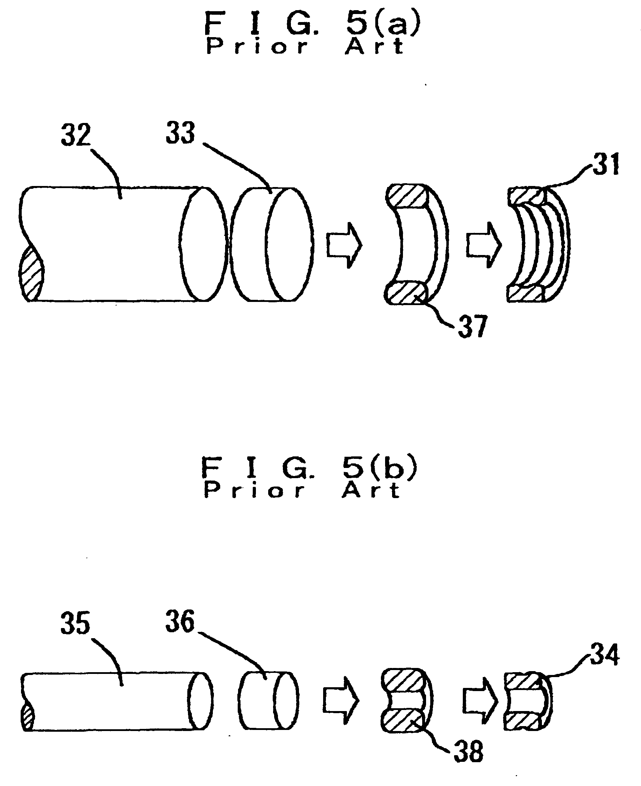

In the other embodiment of the prior art as illustrated in Figs. 5(a), 5(b), each of the ring shaped blanks 37, 38 is formed through cold forging operation from the circular plate work 33 for the outer ring and the circular plate work 36 for the inner ring individually. These ring shaped blanks will then be machined by cutting, grinding and / or polishing operations to form the outer ring 31 and the inner ring 34. Even if in such case, the outer and inner rings are to be produced through individual forging process steps from separate cylindrical bar materials 32, 35 of different diameter.

### Object of the present invention

It is, therefore, the object of the present invention is to provide a method for manufacturing the outer and inner rings of the bearing from a sole cylindrical bar material. This can be effected by forming works for the outer and inner rings from a circular plate work through cold forging at the same time operation, punching out at the same time operation and cutting off at the same time operation.

Consequently the tact time period required for processing can be reduced as well as the material cost can be reduced.

### Summary of the Invention

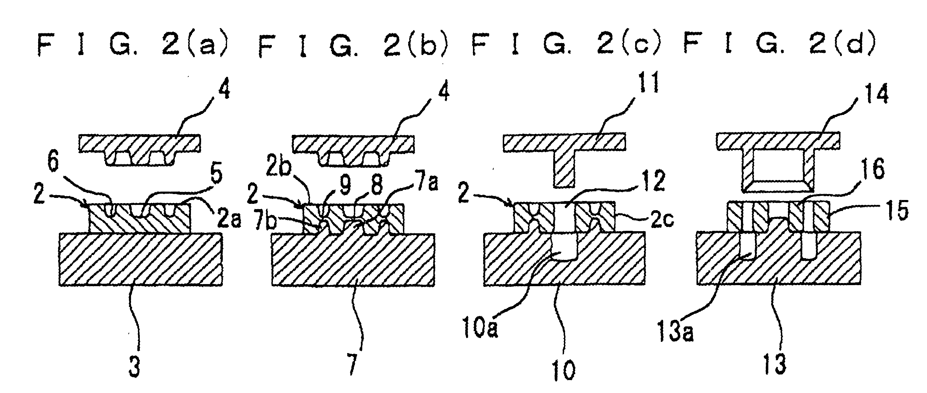

These and other objects are accomplished by a method for manufacturing outer and inner rings of a bearing, the method being characterized in that it comprises the steps of:
cutting a sole cylindrical bar material in a direction perpendicular to the longitudinal axis thereof to form a circular plate work 2 of predetermined width by cutting off bite or cutting off saw (see <S1>),
forming on both plain sides surface of the circular plate work 2 through cold forging operation (see Figs. 2(a) and 2(b)) a central circular recess provided around the axis of the work and an annular groove provided concentrically with respect to the central circular recess (see <S2> and <S3>),
forming a central circular aperture by punching out the central circular recess remaining material in the axial direction by means of a punching die (see Fig. 2(c) and <S4>),
punching out the annular groove remaining material in the axial direction by means of a punching die (see Fig. 2(d)) to form an outer work for the outer ring and an inner work for the inner ring (see <S5>), and
machining each work respectively through cutting, grinding and / or polishing operations to form ring raceways or to finish the surface thereof for mamufacturing the outer and inner rings (see <S6>).

Further, a method for manufacturing outer and inner rings of a bearing, the method being characterized in that it comprises the steps of:
cutting a sole cylindrical bar material in a direction perpendicular to the longitudinal axis thereof to form a circular plate work of predetermined width by cutting off bite or cutting off saw (see <S1>),
forming on both plain sides surface of the circular plate work through cold forging operation (see Figs. 2(a) and 2(b)) a central circular recess provided around the axis of the work and an annular groove provided concentrically with respect to the central recess (see <S2> and <S3>),
forming a central aperture by punching out the thin walled portion defined between the central circular recesses off in the axial direction by means of a punching die (see Fig. 2(c) and <S4>),
grinding the both remaining plain sides of surface and the outer diameter surface of the work,
punching out the annular groove remaining material in the axial direction by means of a punching die (see Fig. 2(d)) to form an outer work for the outer ring and an inner work for the inner ring, and
machining each work respectively through cutting, grinding and / or polishing operations to form ring raceways or to finish the surface thereof for manufacturing the outer and inner rings.

### Brief description of the drawings

Further feature af the present invention will become apparent to those skilled in the art to which the present invention relates from reading the following specification with reference to the accompanying drawings, in which:

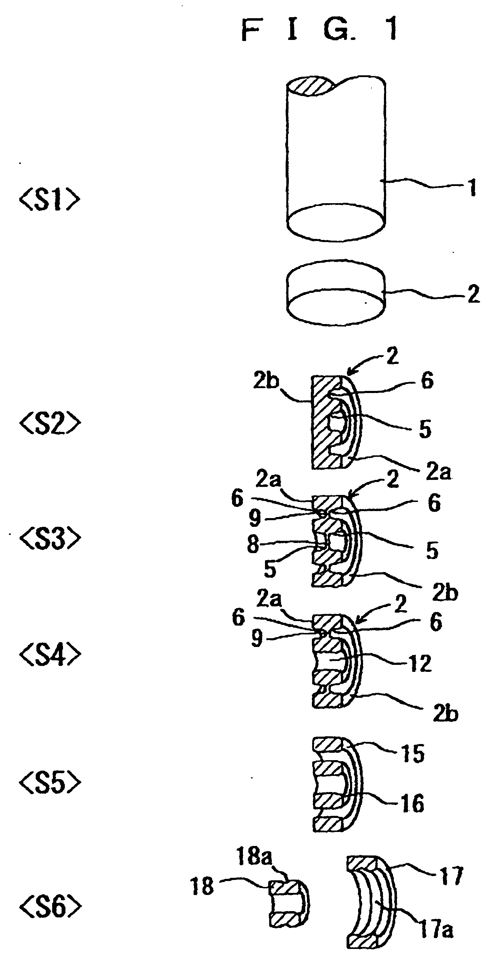

Fig. 1 is a cross sectional perspective view showing a manufacturing method of the present invention;
Fig. 2 is a cross sectional view showing the manufacturing method of the present invention in detail;
Fig. 3 is a cross sectional view showing an example of the bearing;
Fig. 4 (a) is a view showing an example of the manufacturing method of the prior art illustrates a method for manufacturing an outer ring;
Fig. 4 (b) is a view showing an example of the manufacturing method of the prior art illustrates a method for manufacturing an inner ring;
Fig. 5 (a) is a view showing another example of the manufacturing method of the prior art illustrates a method for manufacturing the outer ring; and
Fig. 5 (b) is a view showing another example of a manufacturing method of the prior art illustrates the method for manufacturing the inner ring.

### Detailed description of the present invention

A method for manufacturing outer and inner rings of a ball bearing is explained with reference to the attached drawings in which an example of the present invention is illustrated.

At first, a circular plate work 2 is provided by cutting a cylindrical bar material 1 made of metallic material for the inner and outer rings in a direction perpendicular to the longitudinal axis of the bar (see <S1>).

The cylindrical bar material 1 is made of bearing steel (such as JIS S002 MD). The outer diameter of the cylindrical bar material may substantially be equal to or slightly smaller than the outer diameter of the outer ring to be formed. The width of the work 2 may substantially be equal to or slightly larger than the width of the inner and outer rings to be provided.

Subsequently, the work 2 may be placed on a plane die anvil 3, and the first cold forging operation will be effected on the one plain side surface 2a of the work by means of a forging die 4 to form a central circular recess 5 around the axis of the work and an annular groove 6 concentric with the central circular recess (see <S2>). Thus each of the formed central circular recess 5 and the annular groove 6 has a depth smaller than a half of the width of the work.

Then the work is turned upside down and the second cold forging operation will be effected on the other plain side surface 2b of the work by means of the forging die 4 to provide a central circular recess 5 and an annular groove 6 concentric with the central recess thereon (see <S3>). An die anvil 7 for the second cold forging operation is provided with protrusions 7a and 7b for receiving the central circular recess 5 and the annular groove 6 formed through the first cold forging operation in order to position work precisely prior to the second forging operation as well as to prevent the central circular recess 5 and the annular groove 6 are to be deformed during the second forging operation.

The cold forging operation effected twice as mentioned above will remain a thin walled portion 8 between the central circular recesses 5, 5, and a thin walled portion 9 between the annular grooves 6, 6. These thin walled portions 8 and 9 will be punch out by punching process through the following operation.

The work 2 is then placed on a die anvil 10 including an acceptor hole 10a as shown in Fig. 2(c), and the thin walled portion 8 defined between the central circular recesses 5, 5 is punched out by means of a punching die 11 to form a central circular aperture 12 for an inner diameter fitting the inner ring around a shaft (see <S4>).

Remaining plain sides of surfaces 2a, 2b and an outer diameter surface 2c of the work 2 having the central aperture 12 are ground to the predetermined dimension of the width for outer and inner rings, and outer diameter of the outer ring.

As remaining plain sides of surfaces for both of the inner and outer rings are ground at the same time when the side surfaces 2a, 2b are ground. Hence individual grinding operations required at both side surfaces for the outer and inner rings can be done at the same grinding operation. Further, the width of both rings are mode precisely equal.

The work is placed on an die anvil 13 employing an acceptor groove 13a on the top surface thereof, the annular groove 6 of the work is positioned on the acceptor groove 13a, and the thin walled portion 9 remained between the annular grooves 6, 6 is punched out by a punching die 14 to separate the work into an outer work 15 for the outer ring and an inner work 16 for the inner ring (see <S5>).

Thus obtained works 15 and 16 for the inner and outer rings will then be machined respectively through cutting, grinding and / or polishing operations to form ring raceways or to finish the surface thereof for manufacturing an outer ring 17 and an inner ring 18 (see <S6>).

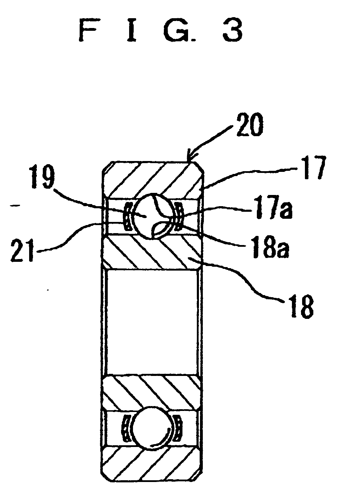

The outer and inner rings 17 and 18 formed in accordance with the method of the invention as mentioned above will be assembled to a ball bearing 20 as shown in Fig. 3 by incorporating a plurality of balls 19 between an outer ring raceway 17a formed on the inner peripheral surface of the outer ring and an inner ring raceway 18a formed on the outer peripheral surface of the inner ring. Component 21 in Fig. 3 is a ball retainer.

In the method of the present invention, the forging operation for forming the central circular recess 5 and the annular groove 6 on both of the plain side surfaces of the work 2 will be node on each side separately through the twice forging operations. Whereas, the twice forging operations can be accomplished by a single forging operation placing the same forging die rigidly on to the die anvil. Thin walled portions remained at bottom of the central circular recess 5 and the annular groove 6 will then be punched out by the punching die.

Further, the central circular recess 5 and the annular groove 6 deeper than those formed on the above mentioned step (<S2> and <S3>) can be formed by a forging operation on only one side surface of the work 2. Thin walled portions remained at bottom of the central circular recess 5 and the annular groove 6 will then be punched out by the punching die.

Materials for the cylindrical bar can be metallic, plastic and ceramic.

In acorrdance with the method of the present invention, instead of preparing two kinds of cylindrical bar materials of different diameter for the outer and inner rings as the prior art method, only necessary to prepare a sole cylindrical bar material having an outer diameter substantially be equal to or slightly smaller than the outer diameter of the outer ring to be formed. Hence the material cost for the bearing can be cut down by reducing the amount of the wasting chips and simplifying standard procedure activities such as purchasing activity, incoming evaluation activity and stock control activity.

The words for the outer and inner rings to which the cutting, grinding and / or polishing operations to be effected are produced from the one circular plate work through cold forging at the same time operation, punching out at the same time operation and cutting off at the same time operation.

Namely, the work for the inner ring is produced from the central portion of the prior art work for the outer ring which is wasted as machined chips in the prior art method. Therefore, the material cost can be reduced dramatically compare to the method of the prior art.

The tact time required for manufacturing outer and inner rings can also be reduced since the works of the outer and inner rings can be produced at the same time.

Thus the outer and inner rings of the bearing can be produced at low cost compare to the prior art.

Since the present invention makes manufacturers free from individual grinding operation to the plain side surfaces of the outer and inner rings, the time required for manufacturing can be reduced and the width of both rings are made precisely equal.

While particular embodiments of the present invention have been illustrated and described, it should be obvious to those skilled in the art that various changes and modifications can be made without departing from the scope of the invention.

## Claims

1. A method for manufacturing outer and inner rings (17,18) of the bearing, comprising the steps of:
cutting a cylindrical bar material (1) in a direction perpendicular to the longitudinal axis thereof to form a circular plate work (2) of predetermined width,
forming on both plain sides of surface of the circular plate work (2) through cold forging operation a central circular recess (5) provided around the axis of the work and an annular groove (6) provided concentrically with respect to the central circular recess,
forming a central circular aperture (12) by punching out the central circular recess remaining material in the axial direction by means of a punching die (11),
punching out the annular groove remaining material in the axial direction by means of a punching die (14) to form an outer work (15) for the outer ring (17) and an inner work (16) for the inner ring (18), and
machining each work (15,16) respectively through cutting, grinding and/or polishing operations to form ring raceways (17a,18a) or to finish the surface thereof for manufacturing the outer and inner rings (17,18).

2. A method for manufacturing outer and inner rings (17,18) of the bearing, the method of forming an outer work (15) for the outer ring (17) and an inner work (16) for the inner ring (18) comprising the steps of:
cutting a cylindrical bar material (1) in a direction perpendicular to the longitudinal axis thereof to form a circular plate work (2) of predetermined width,
forming on both plain sides of surface of the circular plate work (2) through cold forging operation a central circular recess (5) provided around the axis of the work and an annular groove (6) provided concentrically with respect to the central circular recess,
forming a central circular aperture (12) by punching out the central circular recess remaining material in the axial direction by means of a punching die (11),
grinding the both remaining plain sides of surface (2a,2b) and the outer diameter surface (2c) of the work (2),
punching out the annular groove remaining material in the axial direction by means of a punching die (14) to form the outer work (15) for the outer ring (17) and the inner work (16) for the inner ring (18), and
machining each work respectively through cutting, grinding and/or polishing operations to form ring raceways (17a,18a) or to finish the surface thereof for manufacturing the outer and inner rings (17,18).

## Patentansprüche

1. Verfahren zur Herstellung eines inneren und äußeren Rings (17, 18) des Lagers, umfassend die Schritte:
Schneiden eines zylindrischen Stangenmaterials (1) in einer Richtung senkrecht zur Längsachse desselben, um eine kreisförmige Werkstückplatte (2) von vorbestimmter Breite zu bilden,
Ausbilden auf beiden ebenen Seiten der Oberfläche der Werkstückplatte (2) durch Kaltschmieden einer zentralen, kreisförmigen Vertiefung (5), welche um die Achse des Werkstücks vorgesehen ist, und einer ringförmigen Nut (6), welche konzentrisch in Bezug auf die zentrale, kreisförmige Vertiefung vorgesehen ist;
Ausbilden einer zentralen kreisförmigen Öffnung (12) durch Ausstanzen des in der zentralen, kreisförmigen Vertiefung verbleibenden Materials in der axialen Richtung mittels eines Lochstempels (11),
Ausstanzen des in der ringförmigen Nut verbleibenden Materials in der axialen Richtung mittels eines Lochstempels (14), um ein äußeres Werkstück (15) für den äußeren Ring (17) und ein inneres Werkstück (16) für den inneren Ring (18) auszubilden, und
spanabhebendes Bearbeiten jedes Werkstücks (15, 16) jeweils durch Schneid-, Schleif- und/oder Poliervorgänge, um Ringlaufbahnen (17a, 18a) auszubilden, oder um die Oberfläche derselben zur Herstellung des äußeren und inneren Rings (17, 18) fertig zu bearbeiten.

2. Verfahren zur Herstellung eines inneren und äußeren Rings (17, 18) des Lagers, wobei das Verfahren, um ein äußeres Werkstück (15) für den äußeren Ring (17) und ein inneres Werkstück (16) für den inneren Ring (18) auszubilden, die Schritte umfasst:
Schneiden eines zylindrischen Stangenmaterials (1) in einer Richtung senkrecht zur Längsachse desselben, um eine kreisförmige Werkstückplatte (2) von vorbestimmter Breite zu bilden,
Ausbilden auf beiden ebenen Seiten der Oberfläche der Werkstückplatte (2) durch Kaltschmieden einer zentralen, kreisförmigen Vertiefung (5), welche um die Achse des Werkstücks vorgesehen ist, und einer ringförmigen Nut (6), welche konzentrisch in Bezug auf die zentrale, kreisförmige Vertiefung vorgesehen ist;
Ausbilden einer zentralen kreisförmigen Öffnung (12) durch Ausstanzen des in der zentralen, kreisförmigen Vertiefung verbleibenden Materials in der axialen Richtung mittels eines Lochstempels (11),
Schleifen der beiden verbleibenden ebenen Seiten der Oberfläche (2a, 2b) und der äußeren Durchmesseroberfläche (2c) des Werkstücks (2),
Ausstanzen des in der ringförmigen Nut verbleibenden Materials in der axialen Richtung mittels eines Lochstempels (14), um ein äußeres Werkstück (15) für den äußeren Ring (17) und ein inneres Werkstück (16) für den inneren Ring (18) auszubilden, und
spanabhebendes Bearbeiten jedes Werkstücks jeweils durch Schneid-, Schleif- und/oder Poliervorgänge, um die Ringlaufbahnen (17a, 18a) auszubilden, oder um die Oberfläche derselben zur Herstellung des äußeren und inneren Rings (17, 18) fertig zu bearbeiten.

## Revendications

1. Procédé de fabrication de bagues extérieure et intérieure (17, 18) d'un palier de roulement, comprenant les étapes consistant à :
découper un matériau (1) en barre cylindrique selon une direction perpendiculaire à l'axe longitudinal de celui-ci de manière à former une pièce de fabrication en plaque circulaire (2) de largeur prédéterminée,
former sur les deux côtés plans de la pièce de fabrication en forme de plaque circulaire (2), au moyen d'une opération de forgeage à froid, un évidement circulaire central (5) agencé autour de l'axe de la pièce de fabrication, et une rainure annulaire (6) agencée concentriquement par rapport à l'évidement circulaire central,
former une ouverture circulaire centrale (12) par matriçage du matériau résiduel de l'évidement circulaire central en direction axiale, au moyen d'une matrice de poinçonnage (11),
matricer le matériau résiduel de la rainure annulaire en direction axiale au moyen d'une matrice de poinçonnage (14), de manière à former une pièce de fabrication extérieure (15) pour la bague extérieure (17), et une pièce de fabrication intérieure (16) pour la bague intérieure (18), et
usiner respectivement chaque pièce de fabrication (15, 16) par des opérations de découpe, meulage et/ou polissage, de manière à former des chemins de roulement (17a, 18a) ou à assurer la finition de l'état de surface de ceux-ci pour la fabrication des bagues extérieure et intérieure (17, 18).

2. Procédé de fabrication des bagues extérieure et intérieure (17, 18) d'un palier de roulement, le procédé de fabrication d'une pièce de fabrication extérieure (15) pour la bague extérieure (17) et d'une pièce de fabrication intérieure (16) pour la bague intérieure (18) comprenant les étapes consistant à :
découper un matériau (1) en barre cylindrique selon une direction perpendiculaire à l'axe longitudinal de celui-ci de manière à former une pièce de fabrication en forme de plaque circulaire (2) de largeur prédéterminée,
former sur les deux côtés plans de la pièce de fabrication en plaque circulaire (2) au moyen d'une opération de forgeage à froid un évidement circulaire central (5) agencé autour de l'axe de la pièce de fabrication, et une rainure annulaire (6) agencée concentriquement par rapport à l'évidement circulaire central,
former une ouverture circulaire centrale (12) par matriçage du matériau résiduel de l'évidement circulaire central en direction axiale, au moyen d'une matrice de poinçonnage (11),
meuler les deux côtés plans restants (2a, 2b) de la surface plane, et la surface (2c) de diamètre extérieur de la pièce de fabrication (2),
matricer le matériau résiduel de la rainure annulaire en direction axiale au moyen d'une matrice de poinçonnage (14), de manière à former la pièce de fabrication extérieure (15) pour la bague extérieure (17) et la pièce de fabrication intérieure (16) pour la bague intérieure (18), et
usiner respectivement chaque pièce de fabrication par des opérations de découpe, meulage et/ou polissage, de manière à former des chemins de roulement (17a, 18a) ou à assurer la finition de l'état de surface de ceux-ci pour la fabrication des bagues extérieure et intérieure (17, 18).
